# EUROPEAN PATENT APPLICATION

(11) **EP 4 797 380 A1**
(43) Date of publication of application: **26.08.2026**
(21) Application number: 25866478.8
(22) Date of filing: 28.08.2025
(51) Int. Cl.: H01M 10/54, H01M 10/44, B09B 3/30, B09B 3/70, B26F 1/14, B26F 1/24, B09B 101/16

(54) **APPARATUS AND METHOD FOR TREATING BATTERY**

(30) Priority: 10.09.2024 KR 20240123200
(71) Applicant: LG Energy Solution, Ltd., Seoul 07335 (KR)
(72) Inventor: KIM, Dong Hyeon, Daejeon 34122 (KR)
(74) Representative: Goddar, Heinz J.
(86) International application number: PCT/KR2025/013152
(87) International publication number: WO 2026/059178

(57) **Abstract**

A battery treatment apparatus according an embodiment of the present disclosure comprises: a jig including an internal space into which the battery is inserted; a punching unit configured to move in a direction toward the jig and form a reaction hole in the battery; and a driving unit configured to move the jig and the punching unit, wherein the jig is configured to be able to limit movement of the battery immersed in the discharge material.

## Description

### TECHNICAL FIELD

### Cross Citation with Related Application(s)

This application claims priority to and the benefit of Korean Patent Application No. 10-2024-0123200, filed on September 10, 2024, the disclosure of which is incorporated herein by reference in its entirety.

The present disclosure relate to an apparatus and method for treating a battery, and more particularly, to an apparatus and method for disposal treatment of a battery capable of improving safety.

### BACKGROUND

In modern society, as portable devices such as a mobile phone, a notebook computer, a camcorder and a digital camera, and energy storage system (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages of being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and an exterior case, i.e., a battery case which seals and houses the electrode assembly together with an electrolyte.

In general, depending on the shape of exterior cases, the lithium secondary battery may be classified into a can-type secondary battery in which the electrode assembly is incorporated into a metal can, and a pouch-type secondary battery in which the electrode assembly is incorporated into in a pouch made of an aluminum laminate sheet.

On the other hand, when decomposing and analyzing such secondary batteries or disposing of secondary batteries having reached the end of their lifetime, metals such as lithium inside the secondary battery can react with external moisture to cause explosions or fires, and hazardous substances such as organic solvents in the electrolyte or transition metals contained in the positive electrode may flow out to the outside to cause serious environmental contamination. Therefore, when decomposing and analyzing secondary batteries or disposing of secondary batteries having reached the end of their lifetime, treatments such as reacting the secondary batteries with substances such as salt water to discharging them are required.

Conventionally, for disposal treatment of secondary batteries, a method has been used in which workers directly cut secondary batteries using tools such as cutter knives or punching machines and then drop them into a salt water storage tank. This method is problematic in that workers may be exposed to danger due to flames or gases that are generated during the reaction between the secondary battery and salt water, and the batteries may float up outside the saltwater, thereby causing fires or gas dispersion.

### DETAILED DESCRIPTION OF THE INVENTION

### Technical Problem

It is an object of the present disclosure to provide an apparatus and method for disposal treatment of a battery capable of improving safety
However, the technical objects to be solved by embodiments of the present disclosure are not limited to the above-described objects, and can be variously expanded within the scope of the technical idea included in the present disclosure.

### Technical Solution

In an illustrative aspect of the present disclosure, provided is a battery treatment apparatus comprising: a jig including an internal space into which the battery is inserted; a punching unit configured to move in a direction toward the jig and form a reaction hole in the battery; and a driving unit configured to move the jig and the punching unit, wherein the jig is configured to be able to limit movement of the battery immersed in the discharge material.

In an embodiment, the jig may comprise: a lower plate on which the battery is seated; and an upper plate that limits upward movement of the battery.

In an embodiment, the jig may further comprise: a guard that is disposed between the lower plate and the upper plate and covers a side surface of the internal space.

In an embodiment, at least a part of the guard may be configured to be openable and closable.

In an embodiment, at least a part of the jig may be formed with a flow hole.

In an embodiment, the driving unit may allow the jig and the punching unit to move in an up-and-down direction.

In an embodiment, the driving unit may comprise: a first shaft formed in a hollow cylindrical shape; a second shaft formed in a hollow cylindrical shape and configured to be able to go in and out to the inside of the first shaft; and a third shaft connected to the punching unit and configured to be able to go in and out to the inside of the second shaft.

In an embodiment, the battery treatment apparatus may further comprise a column member that is formed to extend along the direction of movement of the jig and the punching unit.

In an embodiment, the column member may be connected to the jig and the punching unit and guide movement of the jig and the punching unit.

In an embodiment, the battery treatment apparatus may further comprise a first stopper that is coupled to an upper part of the column member to limit downward movement of the jig.

In an embodiment, the battery treatment apparatus may further comprise a second stopper that is formed on at least a part of the column member to limit upward movement of the punching unit.

In an embodiment, the punching unit may comprise: a base plate; and a punching needle coupled to the base plate so that one end faces the jig.

In an embodiment, the upper plate may be formed with an upper through-hole so that the punching needle can pass through.

In an embodiment, the punching needle and the upper through-hole are formed in plural numbers, the plurality of punching needles may be evenly distributed over the entire area of the base plate, and the plurality of upper through holes may be formed in the upper plate to correspond to the positions of the plurality of punching needles
In an embodiment, the base plate may be disposed in parallel with the upper plate, and the punching needle may be coupled to the base plate so as to extend in a direction perpendicular to the base plate.

In an embodiment, the punching unit may further comprise: an elastic connecting member that is disposed between the base plate and the upper plate and surrounds the punching needle.

In an embodiment, the battery may be a charged battery or a decomposition electrode, and the discharge material may be salt water.

In another illustrative aspect of the present disclosure, provided is a battery treatment method, comprising: an insertion step of inserting the battery into a jig; an immersion step of moving the jig and immersing the battery in the discharge material; a reaction step of forming a reaction hole in the battery and reacting the battery with the discharge material under the state that movement of the battery is limited.

In an embodiment, the reaction step may be a step of reacting the battery with the discharge material under the state that upward movement of the battery is limited so that the battery is not exposed outside the discharge material.

In an embodiment, the immersion step may be a step of moving the jig downward along the column member formed to extend in the up-and-down direction, and immersing the battery in the discharge material.

### Advantageous Effects

According to specific embodiments of the present disclosure, the jig limits the movement of the battery so that the battery is not exposed outside the discharge material during the reaction between the battery and the discharge material, thereby protecting workers from flames and gases that are generated during the reaction between the battery and the discharge material and preventing the breakout of fires or the diffusion of gas.

Furthermore, the jig into the battery is inserted can be moved in an up-and-down direction along the column member using the driving unit, thereby facilitating the disposal treatment of the batteries.

The effects of the present disclosure are not limited to the effects mentioned above, and additional other effects not mentioned above will be clearly understood from the description of the appended claims by those skilled in the art.

### [BRIEF DESCRIPTION OF THE DRAWING]

FIG. 1 is a front view of a battery treatment apparatus according to an embodiment of the present disclosure.
FIG. 2 is a perspective view of a jig according to an embodiment of the present disclosure.
FIG. 3 is a plan view of a lower plate according to an embodiment of the present disclosure.
FIG. 4 is a plan view of an upper plate according to an embodiment of the present disclosure.
FIG. 5 is a plan view of a first stopper according to an embodiment of the present disclosure.
FIG. 6 is a front view of a punching unit according to an embodiment of the present disclosure.
FIG. 7 is a plan view of a base plate according to an embodiment of the present disclosure.
FIGS. 8 to 11 are diagrams illustrating the operating principles of a battery treatment apparatus according to an embodiment of the present disclosure.
FIG. 12 is a flowchart of a battery treatment method according to another embodiment of the present disclosure.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Before describing the battery treatment apparatus 100 according to an embodiment of the present disclosure, the battery 110 described herein may be a charged battery or a decomposition electrode that require disposal treatment. The battery 110 may be a pouch-type secondary battery, or a configuration in which a pouch surrounds a decomposition electrode. However, the battery 110 is not limited thereto and may refer to any battery hat requires disposal treatment.

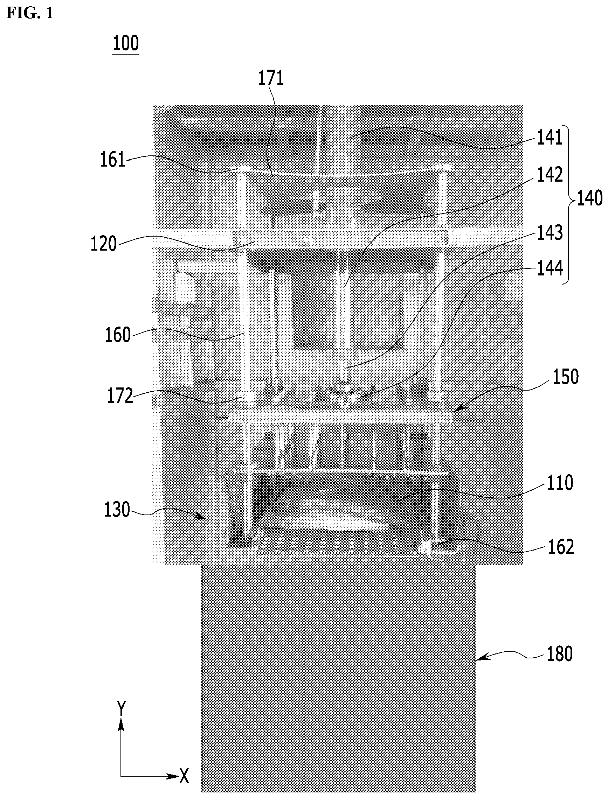

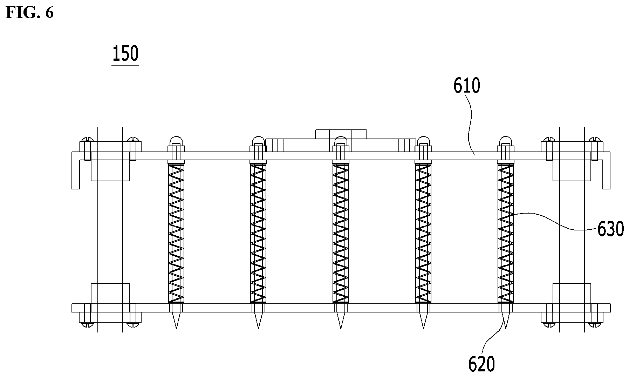

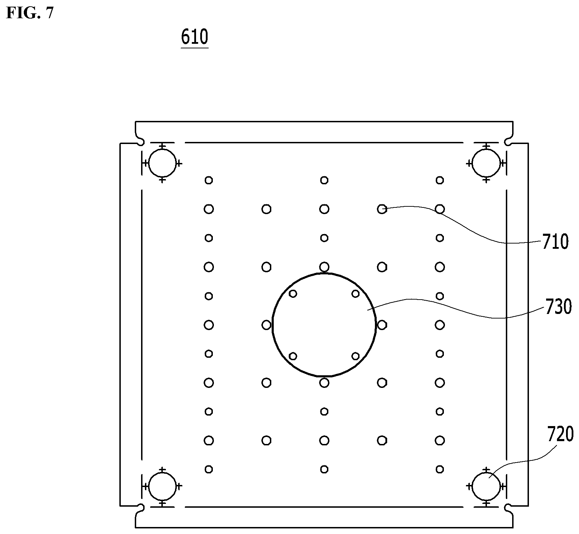

Below, a battery treatment apparatus 100 according to an embodiment of the present disclosure will be described with reference to FIGS. 1 to 7.

The battery treatment apparatus 100 may include a load support unit 120, a jig 130, a driving unit, a punching unit 150, a column member 160, and stoppers 171, 172.

The jig 130 may include a lower plate 220, an upper plate 230, a guard 240, and an internal space 210 into which the battery 110 is inserted.

The driving unit may include a power supply unit (not shown) and a power transmission unit 140.

The power transmission unit 140 may include first to third shafts 141, 142, 143 and a connecting unit 144.

The punching unit 150 may include a base plate 610, a punching needle 620, and an elastic connecting member 630.

The stoppers 171, 172 may include a first stopper 171 and a second stopper 172.

The load support unit 120 is configured to support the load of the battery treatment apparatus 100 according to an embodiment of the present disclosure. When the battery treatment apparatus 100 is disposed inside a booth (not shown), the load support unit 120 is connected to the booth to support the load of the battery treatment apparatus 100. The load support unit 120 may be connected to the power transmission unit 140 and the column member 160. The load support unit 120 may support the load of the power transmission unit 140 and the column member 160. The load support unit 120 may support the load of the jig 130, the punching unit 150, the stoppers 171, 172, and the battery 110.

The jig 130 includes an internal space 210 into which the battery 110 is inserted. The jig 130 is connected to the column member 160. The jig 130 may move together with the column member 160. The power transmission unit 140 pushes and moves the punching unit 150 by the power supply unit. Thereby, the column member 160 connected to the punching unit 150 and the jig 130 connected to the column member 160 can be moved.

The movement of the jig 130 may be guided by the column member 160. The jig 130 may move along the extension direction of the column member 160. For example, as shown in FIG. 1 or the like, if the column member 160 extends in an up-and-down direction (the Y-axis direction of FIG. 1), the jig 130 may move in the up-and-down direction along the column member 160.

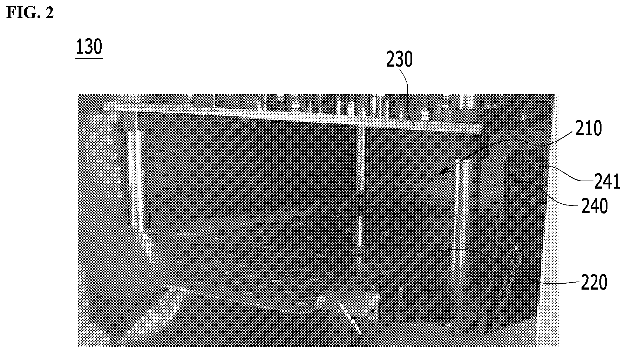

The jig 130 into which the battery 110 is inserted moves, so that the battery 110 may be immersed in the discharge material stored in the storage tank 180. Here, the discharge material may be salt water. The jig 130 is smoothly immersed in the discharge material for the reaction between the battery 110 and the discharge material, and in order to ensure that the jig 130 smoothly escapes from the discharge material after the reaction between the battery 110 and the discharge material is completed, at least a part of the jig 130 may be formed with a flow hole 241 through which the discharge material can flow as shown in FIG. 2. In this case, in the lower plate 220 and the upper plate 230, the discharge material may flow through the lower through-holes 310 and the upper through-holes 410. However, the embodiment is not limited thereto, and additional holes for allowing the discharge material to flow may be formed in the lower plate 220 and the upper plate 230 in addition to the lower through-holes 310 and the upper through-holes 410.

The jig 130 is configured to be able to limit the movement of a battery 110 immersed in a discharge material. The jig 130 may include a lower plate 220 on which the battery 110 is seated and an upper plate 230 that limits the upward movement of the battery 110 immersed in the discharge material. The upper plate 230 may limit the upward movement of the battery 110 so that the battery 110 does not float up and expose outside the discharge material, in a state where the battery 110 is immersed in the discharge material. Thereby, it is possible to prevent the breakout of fires or the diffusion of gas due toy flames generated during the reaction between the battery 110 and the discharge material.

The jig 130 may further include a guard 240. The guard 240 may be disposed on the upper plate 230 and the lower plate 220 to cover the side surfaces of the internal space 210. By further disposing guards 240 that cover the side surfaces of the internal space 210, it is possible to prevent the batteries 110 immersed in the discharge material from escaping laterally and floating up outside the discharge material. As a result, as the jig 130 further includes the guards 240, it is possible to more effectively prevent the batteries 110 from being exposed outside the discharge material.

At least a part of the guard 240 may be configured to be openable and closable. For example, if the upper plate 230 and the lower plate 220 has a square shape, one of the guards 240 covering the four surfaces between the upper plate 230 and the lower plate 220 may be configured to be openable and closable. The guard 240 may be configured to be openable and closable by being connected to the lower plate 220 and/or the upper plate 230 using a hinge or the like. Thereby, the worker can easily insert the battery 110 into the jig 130. A flow hole 241 may be formed in the guard 240.

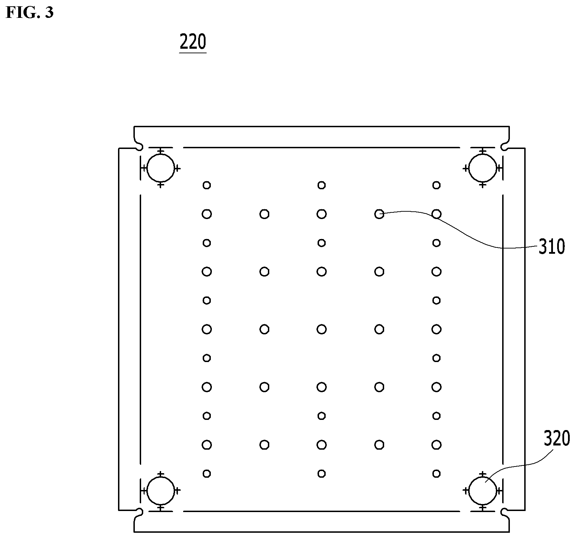

Referring to FIG. 3, the lower plate 220 may be formed with lower through-holes 310 so that the punching needles 620 of the punch unit 150 can pass through. The lower through-holes 310 may be formed to correspond to the number and positions of the punching needles 620. For example, if a plurality of punching needles 620 are evenly distributed on the base plate 610, the same number of lower through-holes 310 as the number of punching needles 620 may be formed in the lower plate 220 so as to correspond to the positions of the punching needles 620.

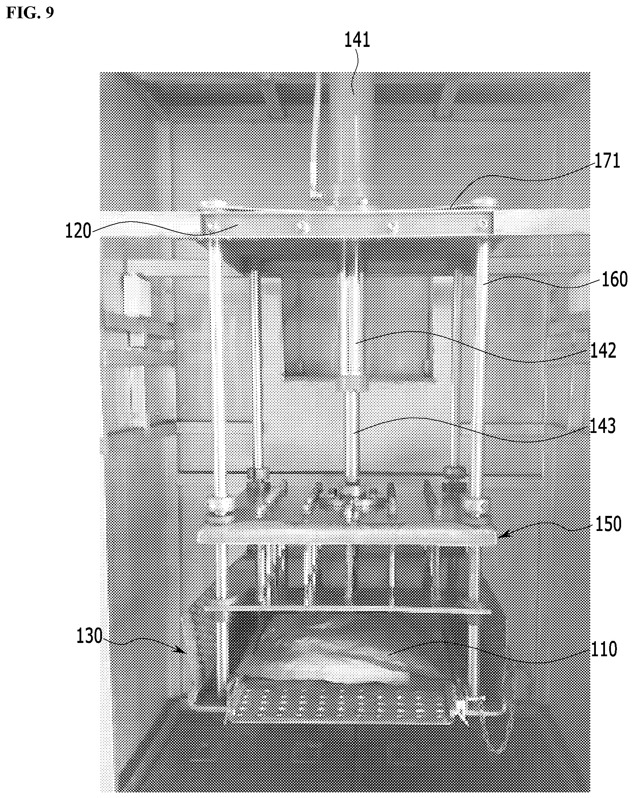

However, it is not absolutely necessary for the lower through-holes 310 to be formed in the same number or at the corresponding positions as the punching needles 620, and they may be configured differently as needed within a range that is necessary for achieving the objectives of the present disclosure. For example, if the number of lower through-holes 310 is less than the number of punching needles 620, or if the lower through-holes 310 are not formed at positions corresponding to the punching needles 620, some of the plurality of punching needles 620 may pass through the battery 110 and then through the lower through-holes 310 and the remaining some make contact with the lower plate 220, as shown in FIG. 9.

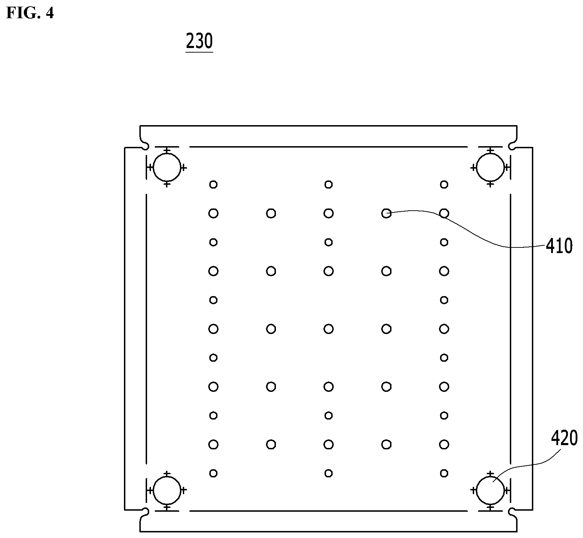

Referring to FIG. 4, an upper through-hole 410 may be formed in the upper plate 230 so that the punching needle 620 of the punching unit 150 can pass through. The upper through-holes 410 may be formed to correspond to the number and positions of the punching needles 620. For example, if a plurality of punching needles 620 are evenly distributed on the base plate 610, the same number of upper through-holes 410 as the number of punching needles 620 may be formed in the upper plate 230 to correspond to the positions of the punching needles 620.

The driving unit can move the punching unit 150 and the jig 130. The driving unit may include a power supply unit and a power transmission unit 140. The driving unit moves the jig 130 so that the batteries 110 inserted into the internal space 210 of the jig 130 are immersed in the discharge material. The driving unit can move the jig 130 in the up-and-down direction.

The power supply unit may be connected to the power transmission unit 140 to transmit power to the power transmission unit 140. The power supply unit may be a motor or a hydraulic device, but is not limited thereto. When the battery treatment apparatus 100 is disposed inside the booth, the power supply unit may be disposed outside the booth and provide power to the power transmission unit 140.

The power transmission unit 140 moves the punch unit 150 using power provided by the power supply unit. As the punching unit 150 moves, the column member 160 connected to the punching unit 150 and the jig 130 connected to the column member 160 can move.

The power transmission unit 140 may include a first shaft 141, a second shaft 142, a third shaft 143, and a connecting member 144.

The first shaft 141 may be fixed to the upper part of the load support unit 120. The first shaft 141 may be formed in a hollow cylindrical shape. The second shaft 142 and the third shaft 143 may go in and out to the inside of the first shaft 141. The first shaft 141 may wrap and support the second shaft 142 and the third shaft 143.

The second shaft 142 may be configured to be able to go in and out to the inside of the first shaft 141. The second shaft 142 may be configured to escape from the inside of the first shaft 141 to the outside and be able to be housed inside the first shaft 141 from the outside. While the second shaft 142 escapes from the inside of the first shaft 141 to the outside, the punching unit 150, the column member 160 and the jig 130 can move downward. While the second shaft 142 is housed inside the first shaft 141 from the outside, the punching unit 150, the column member 160, and the jig 130 can move upward. The second shaft 142 may be formed in a hollow cylindrical shape. The third shaft 143 may go in and out to the inside of the second shaft 142.

The third shaft 143 may be configured to be able to go in and out to the inside of the second shaft 142. The third shaft 143 may be configured to escape from the inside of the second shaft 142 to the outside and to be able to house in the inside of the second shaft 142 from the outside. The third shaft 143 may be connected to the punching unit 150. The third shaft 143 may be connected to the punching unit 150 using a connecting member 144. While the third shaft 143 escape from the inside of the second shaft 142 to the outside, the punching unit 150, the column member 160, and the jig 130 may move downward. While the third shaft 143 is housed from the outside into the second shaft 142, the punching unit 150, the column member 160, and the jig 130 can move upward.

The connecting member 144 connects the power transmission unit 140 and the punching unit 150. The connecting member 144 connects the third shaft 143 and the base plate 610. The connecting member 144 may be coupled to each of the third shaft 143 and the base plate 610. The connecting member 144 may be coupled to one end of the third shaft 143 with a bolt and nut. The connecting member 144 may be coupled to the base plate 610 so as to be located in the shaft fastening hole 730 of the base plate 610. In order to allow the power transmission unit 140 to stably move the punching unit 150, the connecting member 144 may have a larger cross-sectional area than the power transmission unit 140. Here, the cross-sectional area refers to the area of a cross section taken along the X-axis of FIG. 1. The connecting member 144 has a larger cross-sectional area than the power transmission unit 140, thereby allowing the power transmission unit 140 to more stably push and pull the punching unit 150.

The column member 160 is formed to extend along the movement direction of the punching unit 150 and the jig 130. For example, the column member 160 may have a columnar shape extending in the up-and-down direction (the Y-axis direction in FIG. 1), and the punching unit 150 and the jig 130 may be configured to move in the up-and-down direction.

The column member 160 may be connected to the load support unit 120, the punching unit 150, and the jig 130. For example, the jig 130 may be connected to the lower part of the column member 160, the punching unit 150 may be connected to the upper part of the jig 130, and the load support unit 120 may be connected to the upper part of the punching unit 150. As the driving unit pushes or pulls the punching unit 150, the punching unit 150, the column member 160, and the jig 130 can move.

The column member 160 may be structured to support the punching unit 150 and the jig 130 while guiding the movement of the punching unit 150 and the jig 130. For example, the lower plate 220 and upper plate 230 of the jig 130, and the base plate 610 of the punching unit 150 may be formed in a square plate-like shape, and four column members 160 may be coupled to respective plates 220, 230, 610 in the vicinity of the vertices of the plates 220, 230, 610, and be structured to support and guide the movement of the plates 220, 230, 610. For this purpose, a lower coupling hole 320 may be formed in the vicinity of the vertex of the lower plate 220, an upper coupling hole 420 may be formed in the vicinity of the vertex of the upper plate 230, and a column coupling hole 720 may be formed in the vicinity of the vertex of the base plate 610. However, the structures of the lower plate 220, upper plate 230, base plate 610, and column member 160 are not limited thereto, and may have other shapes within the range that is necessary for achieving the objectives of the present disclosure.

A first stopper 171 may be coupled to the upper part of the column member 160. The first stopper 171 may be coupled to the column member 160 above the load support unit 120 to limit the downward movement of the jig 130. Specifically, the power transmission unit 140 pushes the punching unit 150, so that the punching unit 150, the column member 160 and the jig 130 may move downward. If the punching unit 150, the column member 160 and the jig 130 move downward, and then the first stopper 171 is caught by the load support unit 120, the downward movement of the column member 160 and the lower plate 220 may be limited.

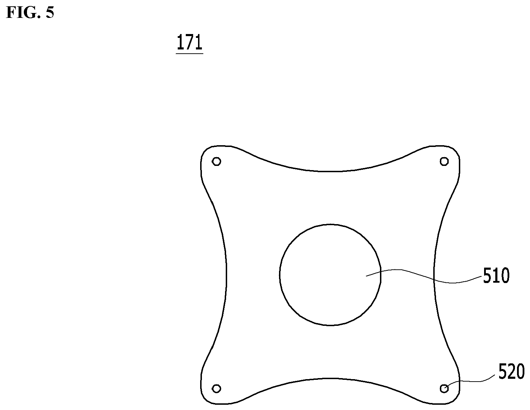

Referring to FIGS. 1 and 5, the first stopper 171 may be formed in a plate shape. The first stopper 171 may have a square plate-like shape in which the edges are concaved toward the center. In this case, a cap coupling hole 520 may be formed in the vicinity of each vertex of the first stopper. In a state where each cap coupling hole 520 is located at the upper end of each column member 160, the upper end cap 161 is inserted into the cap coupling hole 520, so that the first stopper 171 and the column member 160 can be coupled. A central hole 510 may be formed in the first stopper 171. The first stopper 171 and the column member 160 may be coupled such that the first shaft 141 of the power transmission unit 140 passes through the central hole 510. Further, the first stopper 171 has a shape in which the edges are concaved toward the center, so that a space can be further utilized only for a part that is concaved.

At least a part of the column member 160 may be formed with a second stopper 172. The second stopper 172 may limit the upward movement of the punching unit 150. Specifically, in a state where the punching unit 150 is coupled to the column member 160, the second stopper 172 may be formed to make contact with the upper part of the base plate 610 of the punching unit 150. After the jig 130 and the punching unit 150 are lowered and the reaction between the battery 110 and the discharge material is completed, the second stopper 172 limits the upward movement of the punching unit 150 so that the punching unit 150 returns to its initial position without rising higher than its initial position. In order to limit the upward movement of the punching unit 150, the second stopper 172 may be formed in a cylindrical shape with a diameter larger than the column coupling hole 720.

An upper end cap 161 and a lower end cap 162 may be coupled to the upper and lower ends of the column member 160. As described above, the upper end cap 161 connects the first stopper 171 and the column member 160 and prevents the first stopper 171 from being detached from the column member 160. The lower end cap 162 has a structure identical or similar to the upper cap 161, connects the lower plate 220 of the jig 130 and the column member 160 and prevents the lower plate 220 from being detached from the column member 160.

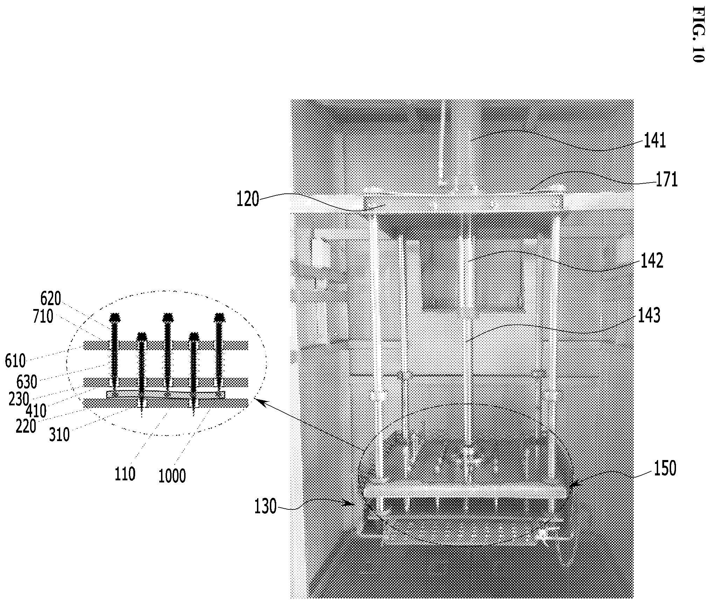

The punching unit 150 moves by the driving unit. The punching unit 150 can move in an up-and-down direction by the driving unit. The punching unit 150 is connected to the driving unit. The punching unit 150 is connected to the power transmission unit 140. The punching unit 150 may be connected to the third shaft 143. The punching unit 150 may be connected to the third shaft 143 by a connecting member 144. The punching unit 150 moves along the column member 160 by the driving unit. The punching unit 150 moves in a direction toward the jig 130 to form a reaction hole 1000 (see FIG. 10) in the battery 110 inserted into the jig 130. The punching unit 150 may be located on the upper part of the jig 130. The punching unit 150 may move downward to form a reaction hole 1000 in the battery 110 inserted into the jig 130.

The punching unit 150 may include a base plate 610, a punching needle 620, and an elastic connecting member 630.

The base plate 610 may include a needle fastening hole 710, a column coupling hole 720, and a shaft fastening hole 730.

The base plate 610 may be moved by a driving unit. The base plate 610 may move in an up-and-down direction. The base plate 610 is connected to the driving unit. The base plate 610 is connected to a power transmission unit 140. The base plate 610 may be connected to a third shaft 143. The base plate 610 may be connected to the third shaft 143 by a connecting member 144. The base plate 610 may be connected to a column member 160. For example, if the base plate 610 is formed in a square shape, column coupling holes 720 are formed in the vicinity of the four vertices of the base plate 610, through which the base plate 610 and the column member 160 may be connected. The base plate 610 may be moved along with the column member 160 by the driving unit. When the first stopper 171 is caught by the load support unit 120 and movement of the lower plate 220 and the column member 160 is limited, the base plate 610 may be further moved along the longitudinal direction of the column member 160 by the driving unit. The upward movement of the base plate 610 may be limited by the second stopper 172 formed on the column member 160. The base plate 610 can be located above the upper plate 230 of the jig 130. The base plate 610 can be located in parallel with the upper plate 230 and the lower plate 220 of the jig 130.

The punching needle 620 is configured to form a reaction hole 1000 in the battery 110. The punching needle 620 may be coupled to the base plate 610 so that one end faces the jig 130. The punching needle 620 may be coupled to the base plate 610 through the needle fastening hole 710 of the base plate 610. When the base plate 610 is disposed in parallel with the upper plate 230 and lower plate 220 of the jig 130, the punching needle 620 may be coupled to the base plate 610 so as to extend in a direction perpendicular to the base plate 610. In order to form the reaction hole 1000 in the battery 110, one end of the punching needle 620 may be formed into a pointed shape. However, the shape of the punching needle 620 is not limited thereto, and may also be a structure that has a flat or blunt shape at one end and forms a reaction hole 1000 in the battery 110 with strong pressure. The punching needle 620 may be disposed in parallel with the column member 160. To form a reaction hole 1000 in the battery 110 seated on the lower plate 220 of the jig 130, the punching needle 620 may be configured to pass through the upper through-hole 410 of the upper plate 230 of the jig 130. The punching needles 620 may be formed in plural numbers, and the plurality of punching needles 620 may be evenly distributed over the entire area of the base plate 610. Thereby, a reaction hole 1000 can be formed in the battery 110 regardless of the position of the battery 110 inserted into the jig 130.

The elastic connecting member 630 is disposed so as to surround at least a part of the punching needle 620. The elastic connecting member 630 is disposed between the base plate 610 and the upper plate 230. The elastic connecting member 630 may be disposed so as to make contact with the base plate 610 and the upper plate 230. The elastic connecting member 630 may be connected to the base plate 610 and the upper plate 230. The elastic connecting member 630 may be made from an elastic material. For example, the elastic connecting member 630 may be a spring. In this case, the diameter of the elastic connecting member 630 may be larger than the diameters of the punching needle 620 and the upper through-hole 410. Thereby, the elastic connecting member 630 may be prevented from being detached downward through the upper through-hole 410 and can maintain a state in which it surrounds the punching needle 620.

The storage tank 180 stores a discharge material that reacts with the battery 110. The storage tank 180 may be disposed below the battery treatment apparatus 100. The storage tank 180 may be disposed below the jig 130. If the battery treatment apparatus 100 is disposed inside a booth, the storage tank 180 may be disposed inside the booth together with the battery treatment apparatus 100.

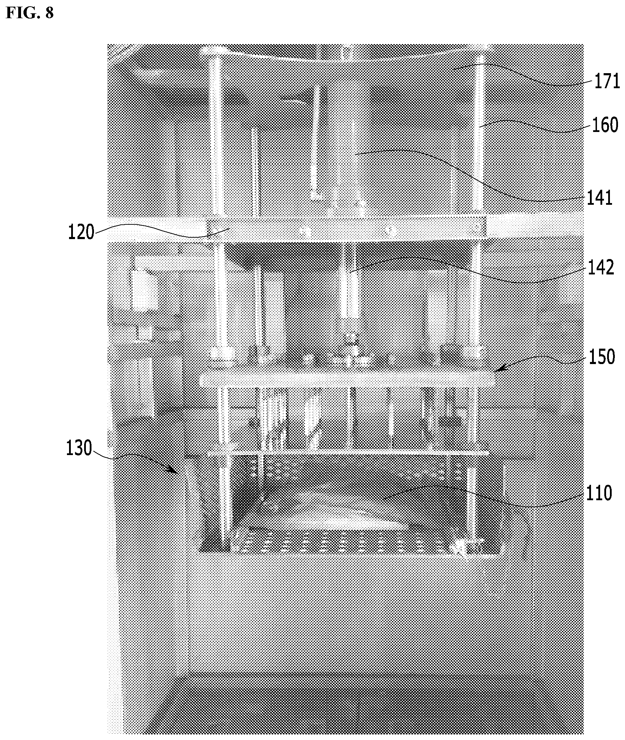

The operating principle of the battery treatment apparatus 100 according to an embodiment of the present disclosure will be described with reference to FIGS. 8 to 11. In addition, to specifically explain the operating principle of the battery treatment apparatus 100, the storage tank 180 is omitted from FIGS. 8 to 11.

Referring to FIG. 8, a battery 110 is inserted into the internal space 210 of the jig 130.

Referring to FIG. 9, the second shaft 142 and the third shaft 143 of the power transmission unit 140 escape from the inside of the first shaft 141 to the outside, and the third shaft 143 escapes from the inside of the second shaft 142 to the outside, thereby pushing and moving the punching unit 150 downward. The column member 160 connected to the punching unit 150 and the jig 130 connected to the column member 160 also move downward. The first stopper 171 engages with the load support unit 120, thereby stopping the column member 160 and the lower plate 220 from moving downward.

Referring to FIG. 10, the power transmission unit 140 further presses the punching unit 150 to thereby lower the punching unit 150 and the upper plate 230. The upper plate 230 makes contact with the lower plate 220 and/or the battery 110, thereby stopping the lowering of the upper plate 230. While the power transmission unit 140 further presses the punching unit 150 and compresses the elastic connecting member 630, the punching needle 620 passes through the upper through-hole 410 in the upper plate 230 to form a reaction hole 1000 in the battery 110 inside the jig 130. In this case, among the plurality of punching needles 620, the punching needle 620 corresponding to a position of a lower through-hole 310 formed on the lower plate 220 may pass through all of the upper plate 230, the battery 110, and the lower plate 220. Among the plurality of punching needles 620, the punching needle 620 not corresponding to a position of a lower through-hole 310 formed on the lower plate 220 may pass through only the upper plate 230 and the battery 110 to form a reaction hole, and one end can make contact with the lower plate 220.

The battery 110 and the discharge material react through the formed reaction hole 1000. In this case, the upper plate 230 and guard 240 of the jig 130 limit the movement of the battery 110 so that the battery 110 does not float up outside the discharge material.

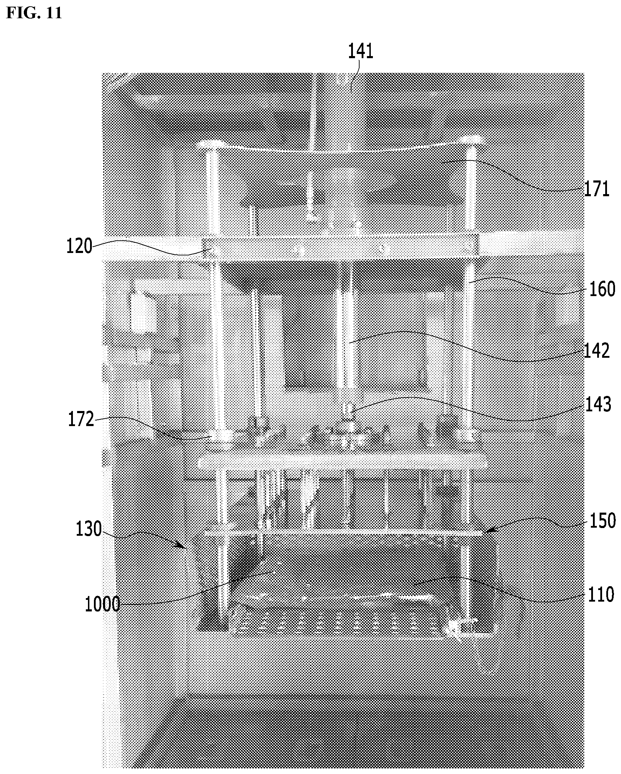

Referring to FIG. 11, the battery treatment apparatus 100 operates in the opposite direction to the above-described lowering mechanism, so that the punching unit 150, the jig 130, and the column member 160 rises to their initial positions. In this case, an elastic connecting member 630 disposed between the base plate 610 of the punching unit 150 and the upper plate 230 of the jig 130 utilizes elasticity to assist the rising of the punching unit 150, thereby ensuring an initial gap between the punching unit 150 and the jig 130. Further, the rising of the punching unit 150 is limited by a second stopper 172 formed on the column member 160, so that the punching unit 150 may be located in its initial position.

As such, in the battery treatment apparatus 100 according to an embodiment of the present disclosure, the breakout of fires and the diffusion of gases can be prevented, disposal treatment of batteries 110 may be facilitated by moving up and down the jig 130 into which the batteries 110 are inserted along the column member 160, and the space where the batteries 110 react with the discharge material is separated from the worker, thereby protecting the worker from flames and gases that are generated during the reaction between the batteries 110 and the discharge material.

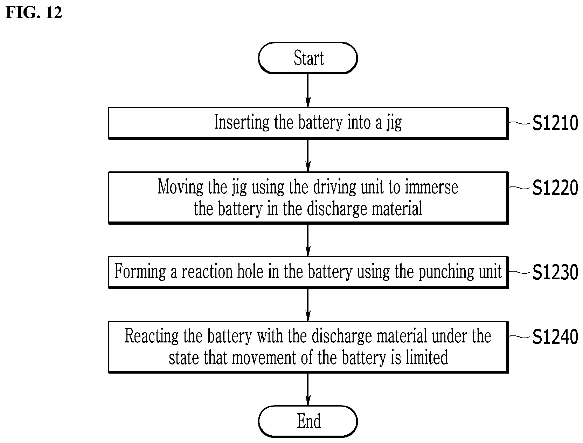

The battery treatment method according to the present disclosure will be described with reference to the flowchart in FIG. 12. Some of the overlapping content described above regarding the battery treatment apparatus 100 will be omitted, but all of the contents described above regarding the battery treatment apparatus 100 can also be applied to the battery treatment method.

The worker inserts the battery 110 into the internal space 210 of the jig 130 (S1210). The worker then seats the battery 110 on the lower plate 220 of the jig 130. As described above, the plurality of punching needles 620 of the punching unit 150 are evenly distributed over the entire area of the base plate 610, and the upper through-holes 410 through which the punching needles 620 pass may be formed in the upper plate 230 to correspond to the positions of the punching needles 620. Therefore, regardless of where the worker places the battery 110 on the lower plate 220, the worker can use the punching unit 150 to form reaction holes 1000 in the battery 110.

The jig 130 is moved using the driving unit to immerse the battery 110 in the discharge material (S1220). The driving unit pushes and moves the punching unit 150, and the column member 160 connected to the punching unit 150 and the jig 130 connected to the column member 160 move together, thereby immersing the jig 130 and the battery 110 in the storage tank 180. In this case, the upper plate 230 and guard 240 of the jig 130 prevent the battery 110 from floating up outside the discharge material.

The punching unit 150 is used to form a reaction hole 1000 in the battery 110 (S1230). In a state where the jig 130 is fixed by the first stopper 171, the punching unit 150 further lowers toward the jig 130. The punching needle 620 of the punching unit 150 passes through the upper through-hole 410 in the upper plate 230 to form a reaction hole 1000 in the battery 110.

The battery 110 is reacted with the discharge material under the state that the movement of the battery 110 is limited (S1240). The battery 110 and the discharge material react through the reaction hole 1000 formed in the battery 110. In this case, the upper plate 230 and guard 240 of the jig 130 may prevent the battery 110 from floating up outside the discharge material, thereby preventing workers from being exposed to hazards such as flames or gases, as well as to prevent the breakout of fires or the diffusion of gas.

Although the flowchart of the present disclosure describe each step as being executed sequentially, this is merely an illustrative description of the technical concepts of some embodiments of the present disclosure. In other words, a person skilled in the art to which some embodiments of the present disclosure pertains will appreciate that various modifications and variations may be made by changing the steps described in the flowchart or by executing one or more of the steps in parallel without departing from the essential characteristics of some embodiments of the present disclosure, and thus the flowchart is not limited to the time-series order.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery treatment apparatus
110: battery
120: load support unit
130: jig
140: power transmission unit
141-143: first to third shafts
144: connecting member
150: punching unit
160: column member
161: upper end cap
162: lower end cap
171: first stopper
172: second stopper
180: storage tank
210: internal space
220: lower plate
230: upper plate
240: guard
241: flow hole
310: lower through-hole
320: lower coupling hole
410: upper through-hole
420: upper coupling hole
510: central hole
520: cap coupling hole
610: base plate
620: punching needle
630: elastic connecting member
710: needle fastening hole
720: column coupling hole
730: shaft fastening hole
1000: reaction hole

## Claims

1. A battery treatment apparatus for reacting a battery with a discharge material, the apparatus comprising:
a jig including an internal space into which the battery is inserted;
a punching unit configured to move in a direction toward the jig and form a reaction hole in the battery; and
a driving unit configured to move the jig and the punching unit,
wherein the jig is configured to be able to limit movement of the battery immersed in the discharge material.

2. The battery treatment apparatus of claim 1,
wherein the jig comprises:
a lower plate on which the battery is seated; and
an upper plate that limits upward movement of the battery.

3. The battery treatment apparatus of claim 2,
wherein the jig further comprises:
a guard that is disposed between the lower plate and the upper plate and covers a side surface of the internal space.

4. The battery treatment apparatus of claim 3,
wherein at least a part of the guard is configured to be openable and closable.

5. The battery treatment apparatus of claim 1,
wherein at least a part of the jig is formed with a flow hole.

6. The battery treatment apparatus of claim 1,
wherein the driving unit allows the jig and the punching unit to move in an up-and-down direction.

7. The battery treatment apparatus of claim 1,
wherein the driving unit comprises:
a first shaft formed in a hollow cylindrical shape;
a second shaft formed in a hollow cylindrical shape and configured to be able to go in and out to the inside of the first shaft; and
a third shaft connected to the punching unit and configured to be able to go in and out to the inside of the second shaft.

8. The battery treatment apparatus of claim 1,
further comprising a column member that is formed to extend along the direction of movement of the jig and the punching unit.

9. The battery treatment apparatus of claim 8,
wherein the column member is connected to the jig and the punching unit and guides movement of the jig and the punching unit.

10. The battery treatment apparatus of claim 9,
further comprising a first stopper that is coupled to an upper part of the column member to limit downward movement of the jig.

11. The battery treatment apparatus of claim 10,
further comprising a second stopper that is formed on at least a part of the column member to limit upward movement of the punching unit.

12. The battery treatment apparatus of claim 2,
wherein the punching unit comprises:
a base plate; and
a punching needle coupled to the base plate so that one end faces the jig.

13. The battery treatment apparatus of claim 12,
wherein the upper plate is formed with an upper through-hole so that the punching needle can pass through.

14. The battery treatment apparatus of claim 13,
wherein the punching needle and the upper through-hole are formed in plural numbers,
the plurality of punching needles are evenly distributed over the entire area of the base plate, and
the plurality of upper through holes are formed in the upper plate to correspond to the positions of the plurality of punching needles

15. The battery treatment apparatus of claim 12,
wherein the base plate is disposed in parallel with the upper plate, and
the punching needle is coupled to the base plate so as to extend in a direction perpendicular to the base plate.

16. The battery treatment apparatus of claim 12,
wherein the punching unit further comprises:
an elastic connecting member that is disposed between the base plate and the upper plate and surrounds the punching needle.

17. The battery treatment apparatus of claim 1,
wherein the battery is a charged battery or a decomposition electrode, and
the discharge material is salt water.

18. A battery treatment method for reacting a battery with a discharge material, the method comprising:
an insertion step of inserting the battery into a jig;
an immersion step of moving the jig and immersing the battery in the discharge material;
a reaction step of forming a reaction hole in the battery and reacting the battery with the discharge material under the state that movement of the battery is limited.

19. The battery treatment method of claim 18,
wherein the reaction step is a step of reacting the battery with the discharge material under the state that upward movement of the battery is limited so that the battery is not exposed outside the discharge material.

20. The battery treatment method of claim 18,
wherein the immersion step is a step of moving the jig downward along the column member formed to extend in the up-and-down direction, and immersing the battery in the discharge material.
